# EUROPEAN PATENT APPLICATION

(11) **EP 4 636 172 A1**
(43) Date of publication of application: **22.10.2025**
(21) Application number: 23928526.5
(22) Date of filing: 17.03.2023
(51) Int. Cl.: E02F 9/20, E02F 9/24

(54) **WORK MACHINE**

(71) Applicant: Hitachi Construction Machinery Co., Ltd., Tokyo 110-0015 (JP)
(72) Inventor: KUROKAMI, Kazushige, Tsuchiura-shi, Ibaraki 300-0013 (JP); ISHII, Takaaki, Tsuchiura-shi, Ibaraki 300-0013 (JP); TOKITA, Shigeki, Tsuchiura-shi, Ibaraki 300-0013 (JP); SAKAMOTO, Hiroshi, Tsuchiura-shi, Ibaraki 300-0013 (JP)
(74) Representative: Manitz Finsterwald Patent- und Rechtsanwaltspartnerschaft mbB
(86) International application number: PCT/JP2023/010665
(87) International publication number: WO 2024/194941

(57) **Abstract**

The present invention has an object to provide a work machine capable of preventing a change in setting state of mounted equipment, which change is provided through an unintended rotational operation, in a case in which the unintended rotational operation is executed on an input device which issues instruction on a setting change for the mounted equipment in response to a translational operation and a rotational operation. For that purpose, in a work machine including a machine body, mounted equipment mounted to the machine body, an input device that is translationally operable and rotationally operable, and a controller that executes setting processing for the mounted equipment in response to the translational operation on the input device and the rotational operation on the input device, the controller executes restriction processing of causing the setting processing for the mounted equipment, the setting processing corresponding to the rotational operation on the input device, to be restricted in a case in which the translational operation and the rotational operation on the input device are simultaneously input or in a case in which a time after any one of the translational operation on the input device and the rotational operation on the input device is finished until the other one of the translational operation and the rotational operation is started is shorter than a predetermined determination time.

## Description

### Technical Field

The present invention relates to a work machine such as a hydraulic excavator.

### Background Art

In the work machine such as the hydraulic excavator, around an operator's seat, there are provided a plurality of input devices for changing various settings of the machine, such as the engine speed and work mode. In recent years, as multifunction of the work machine progresses, the number of these input devices tends to increase.

As the number of input devices increases, the number of components increases, which constitutes a cause of an increase in manufacturing cost. Moreover, an operator is required to find out an input device corresponding to a target function from among the large number of input devices, thereby operating the input device, hence the load on the operator increases, and there is a fear in that a decrease in work efficiency may be caused.

As a document which discloses prior art for solving such a problem, there exists, for example, Patent Document 1. In Patent Document 1, there is described an input device capable of changing settings of the plurality of functions on a single input device. In the input device described in Patent Document 1, a function to be operated can be selected through a translational (swing) operation on the input device, the setting of this function can be changed through a rotational operation, and hence the plurality of functions can be integrated into the one input device, resulting in a reduction in size. Moreover, any function can be operated through the same one input device and hence it is not required to find out an input device corresponding to the target function, thereby being able to reduce the load on the operator.

### Prior Art Document

### Patent Document

Patent Document 1: JP-2006-079407-A

### Summary of the Invention

### Problem to be Solved by the Invention

However, the input device described In Patent Document 1 has the mechanism enabling the translational operation and the rotational operation, and hence there is a fear in that an unintended rotational operation may be input for a reason such as failure in a direction of the application of a force to a grip portion or slip of the gripping hand at the time of the execution of the translational operation.

In this case, the setting state of a function different from the target function is possibly changed through the unintended rotational operation, or the target function is possibly brought into a state different from the intended setting state. In a case in which such an error operation occurs, the operator is required to again execute the translational operation or the rotational operation to change the setting state of the function operated by mistake to the original state or the intended setting state, and thus it is assumed that a decrease in work efficiency is caused.

The present invention has been devised in view of the above problem and has an object to provide a work machine capable of preventing a change in setting state of mounted equipment, which change is provided through an unintended rotational operation, in a case where the unintended rotational operation is executed on an input device which issues instructions on a setting change for the mounted equipment in response to a translational operation and a rotational operation.

### Means for Solving the Problem

In order to attain the object described above, the present invention provides a work machine including: a machine body; mounted equipment mounted to the machine body; an input device that is translationally operable and rotationally operable; and a controller that executes setting processing for the mounted equipment in response to a translational operation on the input device and a rotational operation on the input device, the controller executing restriction processing of causing the setting processing for the mounted equipment, the setting processing corresponding to the rotational operation on the input device, to be restricted in a case in which the translational operation and the rotational operation on the input device are being simultaneously executed or in a case in which a time after any one of the translational operation on the input device and the rotational operation on the input device is finished until the other one of the translational operation and the rotational operation is started is shorter than a predetermined determination time.

### Advantages of the Invention

According to the present invention, where the rotational operation is executed during the translational operation on the input device or where the translational operation and the rotational operation are executed at a short interval, the setting processing corresponding to this rotational operation is restricted, and hence it is possible to prevent the setting state of the mounted equipment from being changed through the unintended rotational operation.

### Brief Description of the Drawings

[Fig. 1] Fig. 1 is an exterior view of a hydraulic excavator being an example of a work machine.
[Fig. 2] Fig. 2 is a view for illustrating an appearance of an inside of a cabin.
[Fig. 3] Fig. 3 is an exterior view of a jog dial.
[Fig. 4] Fig. 4 is a functional block diagram of a controller.
[Fig. 5] Fig. 5 is a diagram for illustrating a correspondence between translational operation directions of the jog dial and functions to be operated.
[Fig. 6] Fig. 6 is a flowchart for illustrating processing in an error operation determination section.
[Fig. 7] Fig. 7 is a table for illustrating a determination time for each of operation possible and impossible states of the hydraulic excavator.
[Fig. 8] Fig. 8 is a flowchart for illustrating a modification example of the processing in the error operation determination section.
[Fig. 9] Fig. 9 is a table for illustrating specific combinations each between the translational operation direction and a rotational operation direction.
[Fig. 10] Fig. 10 is a flowchart for illustrating processing in an operation processing section to which a first method is applied.
[Fig. 11] Fig. 11 is a flowchart for illustrating processing in the operation processing section to which a second method is applied.
[Fig. 12] Fig. 12 is a view for illustrating an example of a display screen of a monitor.
[Fig. 13] Fig. 13 is a view for illustrating an example of the display screen of the monitor.
[Fig. 14] Fig. 14 is a view for illustrating an example of the display screen of the monitor.

### Modes for Carrying Out the Invention

A description is now given of an embodiment of the present invention with reference to the drawings. Note that, in these drawings, the same reference numeral is assigned to equivalent portions and a redundant description thereof is appropriately omitted.

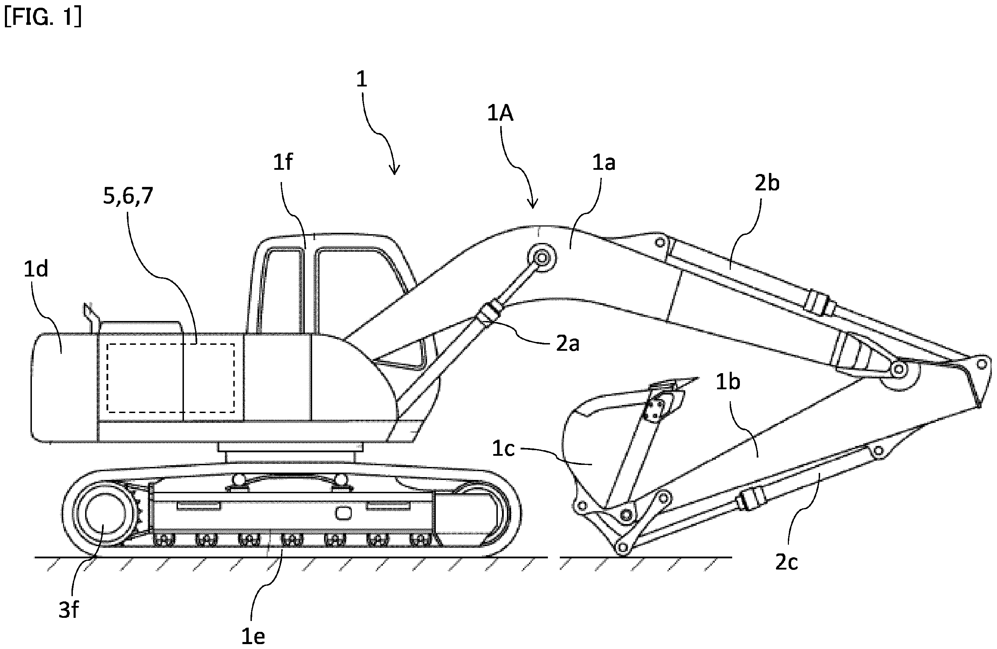

Fig. 1 is an exterior view of a hydraulic excavator being an example of a work machine. A hydraulic excavator 1 includes an articulated front work device 1A formed of a boom 1a, an arm 1b, and a bucket 1c each of which rotates in the vertical direction, an upper swing structure 1d, and a lower travel structure 1e. The upper swing structure 1d is provided with a cabin 1f. The front work device 1A, the upper swing structure 1d, and the lower travel structure 1e form a machine body.

A base end of the boom 1a of the front work device 1A is supported by a front portion of the upper swing structure 1d. The boom 1a, the arm 1b, the bucket 1c, the upper swing structure 1d, and the lower travel structure 1e are driven by actuators being a boom cylinder 2a, an arm cylinder 2b, a bucket cylinder 2c, a swing motor 3d, and left and right travel motors 3e and 3f, respectively. Note that posture sensors 4a, 4b, 4c, and 4d are attached to joint portions of the front work device 1A and a coupling portion between the upper swing structure 1d and the lower travel structure 1e, and hence a rotation angle each thereof can be acquired. To the upper swing structure 1d, an engine 5, a pump 6, an electronic control valve 7, and the like for operating the hydraulic excavator 1 are mounted, and the pump 6 drives through rotation of the engine 5, thereby discharging working fluid.

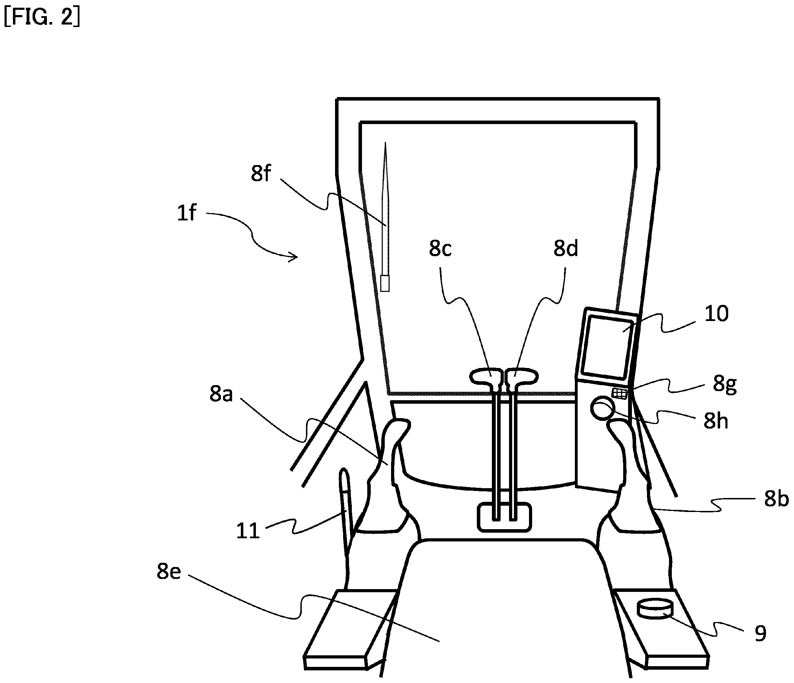

Fig. 2 is a view for illustrating an appearance of the cabin 1f. In the cabin 1f, there is installed an operator's seat 8e on which the operator seats. Around the operator's seat 8e, electric operation levers 8a, 8b, 8c, and 8d are installed. The operation levers 8a and 8b can be operated in four directions of front, rear, left, and right and correspond to operations of the front work device 1A and the upper swing structure 1d, respectively. Moreover, the operation levers 8a and 8d can be operated in two directions of front and rear and correspond to the operation of the left and right travel motors 3e and 3f attached to the lower travel structure, respectively. That is, the operation levers 8a to 8d form an operation device for operating the machine bodies 1A, 1d, and 1e.

On the left side in the cabin 1f, there is provided a shutoff lever 11 which can be switched between a position (unlock position) for inhibiting the operator to getting into and getting out of the cabin 1f and a position (lock position) for allowing the operator to get into or get out of the cabin 1f. When the shutoff lever 11 is at the unlock position, an operation amount of each of the operation levers 8a to 8d is converted to a control command value of each actuator in the controller 12, and the electronic control valve 7 controls a working fluid flow rate to be discharged according to this control command value. When the shutoff lever 11 is at the lock position, the operation amount of each of the operation levers 8a to 8d is not converted to the control command value of each actuator. That is, the shutoff lever 11 forms an operation state switching device which switches between an operatable state in which the operations of the machine body 1A, 1d, and 1e through the operation devices 8a to 8d are possible and a non-operatable state in which the operations of the machine body 1A, 1d, and 1e through the operation devices 8a to 8d are impossible.

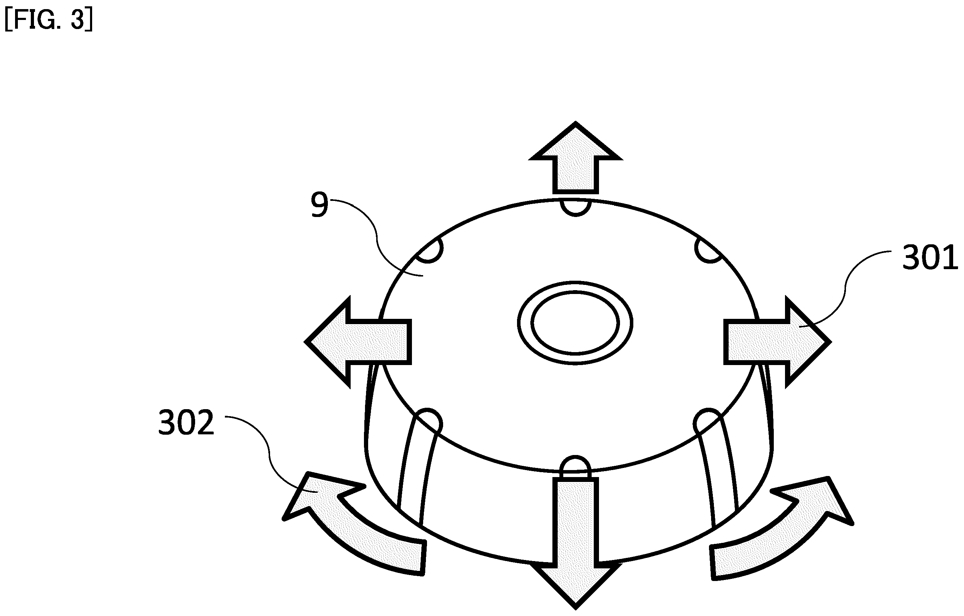

The jog dial 9 serving as the input device is installed on the right side of the operator's seat 8e. The operator operates the jog dial 9, thereby being able to execute various settings relating to the hydraulic excavator 1. An external appearance of the jog dial 9 is illustrated in Fig. 3. The jog dial 9 is a mechanism capable of a translational operation 301 in up, down, left, and right directions and a rotational operation 302, can switch a function to be operated through the translational operation in the up, down, left, and right directions, and can change a setting state of the function through the rotational operation 302. Note that the roles thereof may be swapped and there may be provided such specifications that the function to be operated is switched through the rotational operation 302 and the setting state is changed through the translational operation 301 in the up, down, left, and right directions.

With reference to Fig. 2 again, in a front portion of cabin 1f, a wiper 8f is installed. On a right front side of the cabin 1f, there are mounted a monitor 10 for displaying the various setting states of the hydraulic excavator 1 and the functions currently operable through the jog dial 9, an audio instrument 8g for outputting audio information, and an air conditioner 8h for adjusting the temperature in the cabin 1f.

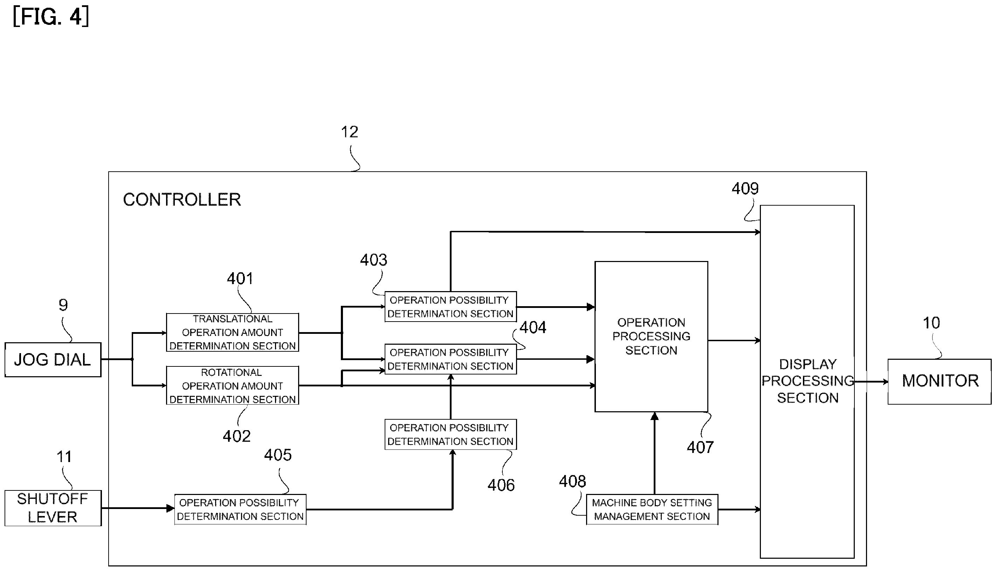

Fig. 4 is a functional block diagram of the controller 12 which executes various types of control on input and output of information to and from the operator, an operation command to the machine bodies, and the like. Note that, in Fig. 4, only processing sections relating to the operation of the jog dial 9 are illustrated and processing sections relating to the other control are omitted. The controller 12 is formed of a translational operation amount determination section 401, a rotational operation amount determination section 402, an operation target determination section 403, an error operation determination section 404, an operation possibility determination section 405, a determination time management section 406, an operation processing section 407, a machine body setting management section 408, and a display processing section 409. The controller 12 includes an arithmetic processing device such as a CPU and storage devices such as a ROM and a RAM and is configured to execute processing in each processing section in accordance with programs stored in the storage devices. A description is now given of processing in each processing section.

The translational operation amount determination section 401 determines a translational operation amount of the jog dial 9 in each of the up, down, left, and right directions and outputs operation information thereon to the operation target determination section 403 and the error operation determination section 404. The rotational operation amount determination section 402 similarly determines a rotational operation amount of the jog dial 9 and outputs operation information thereon to the error operation determination section 404 and the operation processing section 407. Note that each operation amount is output to the operation target determination section 403, the error operation determination section 404, and the operation processing section 407 after unique identification information is added.

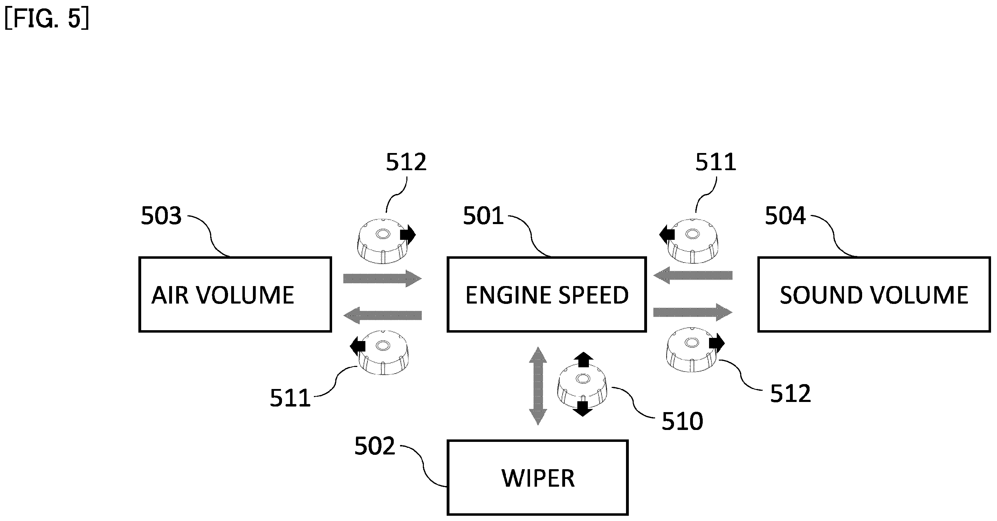

The operation target determination section 403 determines a function to be operated according to the translational operation amount of the jog dial 9. Fig. 5 is a diagram for illustrating a correspondence between the translational operation directions of the jog dial 9 and the functions to be operated. In the present embodiment, it is assumed that four functions being an engine speed, a wiper operation cycle, an air volume of the air conditioner, and an audio volume can be operated through the rotational operation of the jog dial 9. That is, the engine 5, the wiper 8f, the air conditioner 8g, and the audio instrument 8g are mounted equipment the settings of which can be changed through the operation of the jog dial 9. Note that the types of function and the number of functions operable through the jog dial 9 are not limited to the description given above and may optionally be set.

A description is now given of an example of an operation of switching the functions. When the jog dial 9 is in an engine speed mode 501, it is possible to switch the jog dial 9 to a wiper mode 502 through a translational operation 510 of the jog dial 9 toward the up or down direction. It is possible to switch the jog dial 9 to the engine speed mode 501 by executing again the translational operation 510 toward the up or down direction.

Moreover, when the jog dial 9 is in the engine speed mode 501, it is possible to switch the jog dial 9 to an air volume mode 503 through a translational operation 511 of the jog dial 9 toward the left direction. After the transition to the air volume mode 503, it is possible to switch the jog dial 9 to the engine speed mode 501 through the translational operation 512 of the jog dial 9 toward the right direction. The mode can similarly be switched to a sound volume mode 504 through a translational operation 512 of the jog dial 9 toward the right direction in the state of the engine speed mode 501.

A determination result (current operation target) determined by the operation target determination section 403 is output to the operation processing section 407 and the display processing section 409.

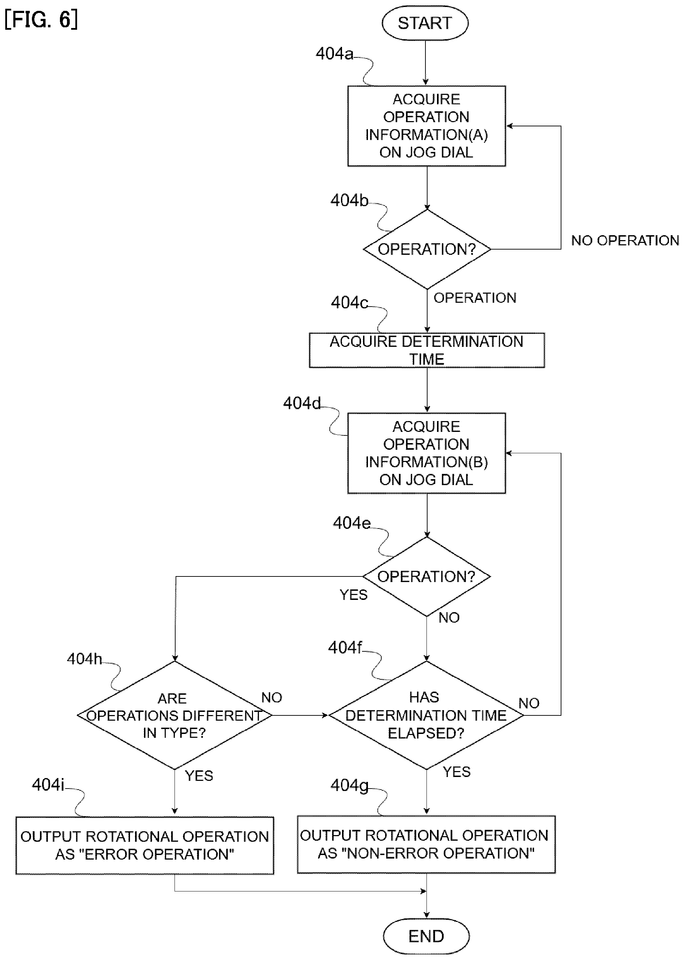

Fig. 6 is a flowchart for illustrating processing in the error operation determination section 404. First, in Step 404a, the error operation determination section 404 acquires the operation information from each of the translational operation amount determination section 401 and the rotational operation amount determination section 402. Note that the operation information acquired in Step 404a is denoted as operation information (A) in order to distinguish from operation information subsequently acquired in Step 404d.

Subsequently to Step 404a, in Step 404b, the error operation determination section 404 determines whether or not the translational operation or the rotational operation is included in the operation information (A). When either one of the operations is included, the error operation determination section 404 proceeds to Step 404c, and, when none of the operations is included, the error operation determination section 404 returns to Step 404a.

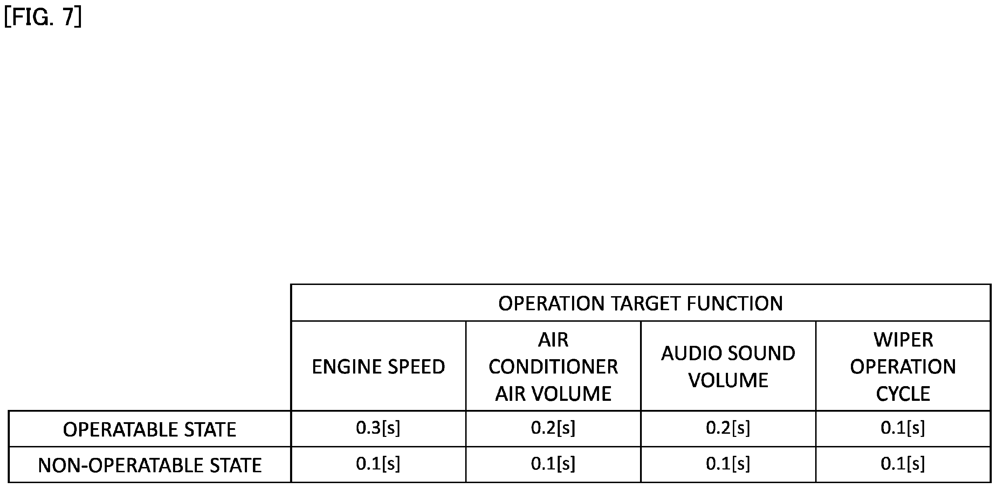

In Step 404c, the error operation determination section 404 acquires a determination time for an error operation from the determination time management section 406. Note that the determination time management section 406 computes the determination time for the error operation according to the operation possible and impossible states of the hydraulic excavator 1. When the hydraulic excavator 1 is in the operatable state, that is, when the hydraulic excavator 1 is executing work, the operator is highly possibly paying attention to the operation of the hydraulic excavator 1 and hence is in a situation in which the operator likely executes an error operation on the jog dial 9. Thus, the determination time management section 406 stores two determination times for each of the operation target functions (engine speed, air conditioner air volume, audio sound volume, and wiper operation cycle) as illustrated in Fig. 7 and outputs, to the error operation determination section 404, any one of the determination times according to the operation impossible state of the hydraulic excavator 1. In the example illustrated in Fig. 7, the determination times relating to the engine speed, the air conditioner air volume, and the audio sound volume are set such that the determination time in the operatable state is longer than the determination time in the non-operatable state. Note that three or more determination times may be stored for each operation target function and the determination time may be determined on the basis of the input states of the operation levers 8a to 8d, the function currently assigned to the jog dial 9, and the like.

Subsequently to Step 404c, the error operation determination section 404 again acquires the operation information from the translational operation amount determination section 401 and the rotational operation amount determination section 402 in Step 404d. Note that the operation information acquired in Step 404d is denoted as operation information (B). In Step 404e, which follows, the error operation determination section 404 determines whether or not the translational operation or the rotational operation is included in the operation information (B). When any one of the operations is included, the error operation determination section 404 proceeds to Step 404h, and when none thereof is included, the error operation determination section 404 proceeds to Step 404f.

In Step 404f, the error operation determination section 404 determines whether or not an elapsed time since the operation included in the operation information (A) has finished is equal to or longer than the determination time. When the elapsed time is shorter than the determination time, the error operation determination section 404 returns to Step 404d and when the elapsed time is equal to or longer than the determination time, the error operation determination section 404 proceeds to Step 404g.

In Step 404g, the error operation determination section 404 determines that the rotational operation included in the operation information (A) or the operation information (B) on the jog dial 9 is not the error operation, outputs, as the error operation determination result, "non-error operation" to the operation processing section 407, and finishes this flow.

In Step 404h, the error operation determination section 404 determines whether or not the operation included in the operation information (A) and the operation included in the operation information (B) are operations different in type. When both of the operations are the translational operations or both of the operations are the rotational operation, the error operation determination section 404 proceeds to Step 404f and when one operation is the translational operation and the other operation is the rotational operation, the error operation determination section 404 proceeds to Step 404i.

In Step 404i, the error operation determination section 404 determines that the rotational operation included in the operation information (A) or the operation information (B) is an error operation, outputs "error operation" as the error operation determination result to the operation processing section 407, and finishes this flow. As a result, when the translational operation and the rotational operation are simultaneously being executed or when the time after any one operation of the translational operation and the rotational operation is finished until the other operation is started is shorter than the determination time, this rotational operation is determined to be the non-error operation.

Note that, in the case in which the jog dial 9 is mounted on the right front side of the operator's seat 8e as in the present embodiment, it is assumed that the operator uses the right hand to grip the jog dial 9 so as to cover the jog dial 9 from above. At this time, in the case in which the jog dial 9 is translationally operated toward the right direction, a force is applied to a contact point between the jog dial 9 and the thumb, hence the point of effort likely to be generated on a closer side with respect to the center of the jog dial 9, and the jog dial 9 is likely rotationally operated toward the left direction.

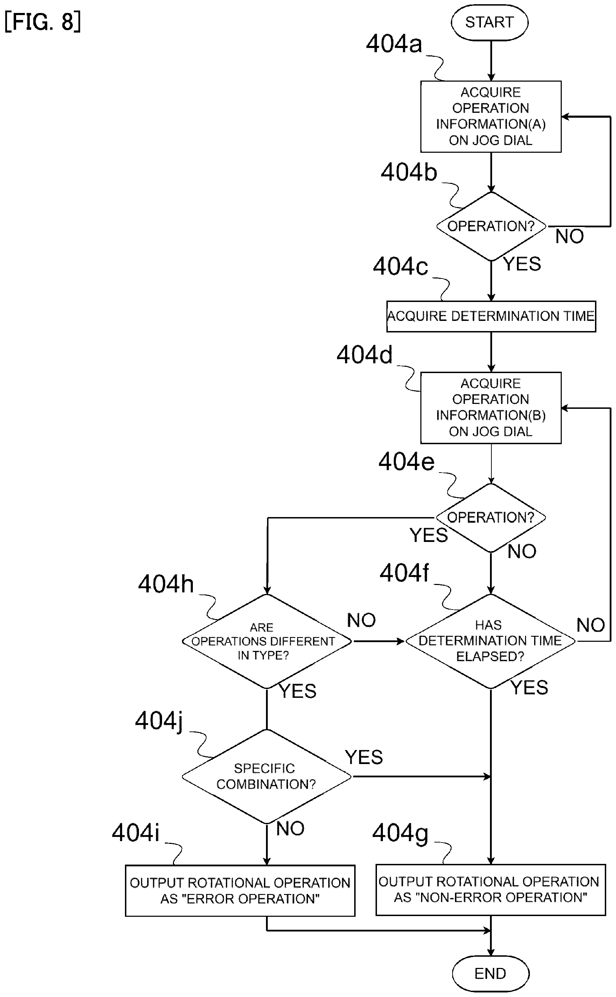

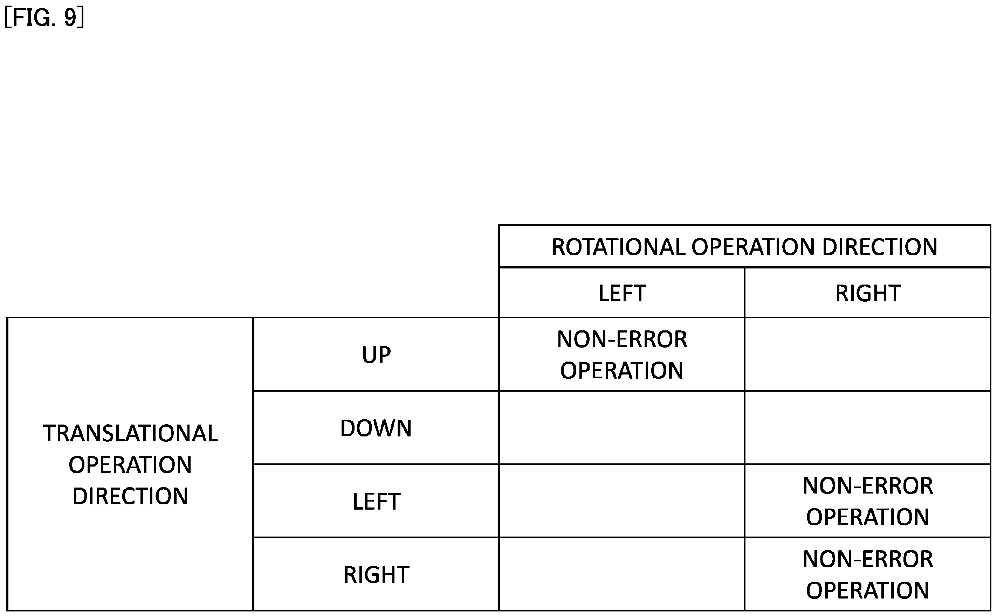

As described above, in the translationally operable and rotationally operable mechanism, there exists a combination of the translational operation direction and the rotational operation direction which likely causes the error operation depending on a use environment such as the mounting position thereof and the like. Thus, in Step 404h, when the operation included in the operation information (A) and the operation included in the operation information (B) are the different operations in type, but they are a combination of the operation directions which unlikely causes the error operation, even when the interval time between these two operations is shorter than the determination time, the rotational operation may be determined as the non-error operation. Processing in the error operation determination section 404 in this case is illustrated in FIG. 8. In FIG. 8, a difference from the flow illustrated in FIG. 6 is such a point that Step 404j is added immediately after Step 404h. In Step 404j, when the combination between the translational operation direction and the rotational operation direction is the specific combination, the error operation determination section 404 proceeds to Step 404g and when the combination between the translational operation direction and the rotational operation direction is not the specific combination, the error operation determination section 404 proceeds to Step 404i. As a result, when the combination between the translational operation direction and the rotational operation direction is the specific combination, even when the interval time between the translational operation and the rotational operation is shorter than the determination time, this rotational operation is determined to be the error operation, and when the combination is another combination, the rotational operation is determined to be the error operation or the non-error operation according to the interval time between the translational operation and the rotational operation. An example of the specific combinations is illustrated in FIG. 9. In the example illustrated in FIG. 9, a combination between the translational operation toward the upper direction and the rotational operation toward the left direction and a combination between the translational operation in the left and right directions and the rotational operation toward the right direction are set as the specific combinations. As a result, the error operation determination can be made more accurately, and hence it is possible to prevent a decrease in work efficiency due to the determination of the error operation unnecessarily made.

A description is now given of processing in operation processing section 407. The operation processing section 407 has two examples of processing methods which is a first method of executing processing after the input rotational operation is confirmed not to be the error operation and a second method of executing processing for the input rotational operation, and then returning the setting state to the original state when this rotational operation is the error operation.

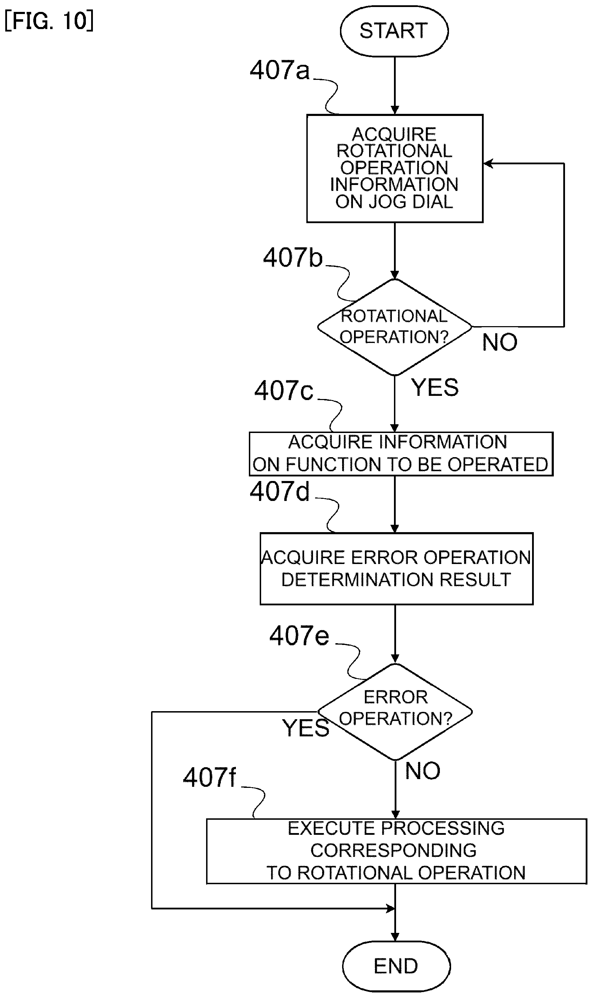

Fig. 10 is a flowchart for illustrating processing in the operation processing section 407 to which the first method is applied. First, in Step 407a, the operation processing section 407 acquires the rotational operation information on the jog dial 9 and determines whether or not the rotational operation is included in Step 407b, which follows. When the rotational operation is not included, the operation processing section 407 returns to Step 407a, and when the rotational operation is included, the operation processing section 407 proceeds to Step 407c. In Step 407c, the operation processing section 407 acquires information on the function to currently be operated from the operation target determination section 403.

Subsequently to Step 407c, the operation processing section 407 acquires the determination result (error operation determination result) indicating whether or not the rotational operation acquired in Step 407a is the error operation from the error operation determination section 404 in Step 407d, and determines whether or not the error operation determination result acquired in Step 407d is "error operation" in Step 407e, which follows. When the error operation determination result is determined not to be "error operation," the operation processing section 407 proceeds to Step 407f and executes setting processing (processing of changing a setting state) corresponding to the rotational operation acquired in Step 407a.

Meanwhile, when the error operation determination result is determined to be "error operation" in Step 407e, the operation processing section 407 skips execution of the setting processing corresponding to the rotational operation acquired in Step 407a and finished this flow. The processing of skipping the setting processing corresponding to the rotational operation constitutes restriction processing of causing the setting processing for the mounted equipment 5 and 8f to 8h corresponding to the rotational operation to be restricted. As described above, in the first method, until the determination result of the error operation determination section 404 for the input rotational operation is acquired, the setting processing corresponding to this rotational operation is avoided, thereby invalidating the change in the setting state, which change is provided through the unintended rotational operation.

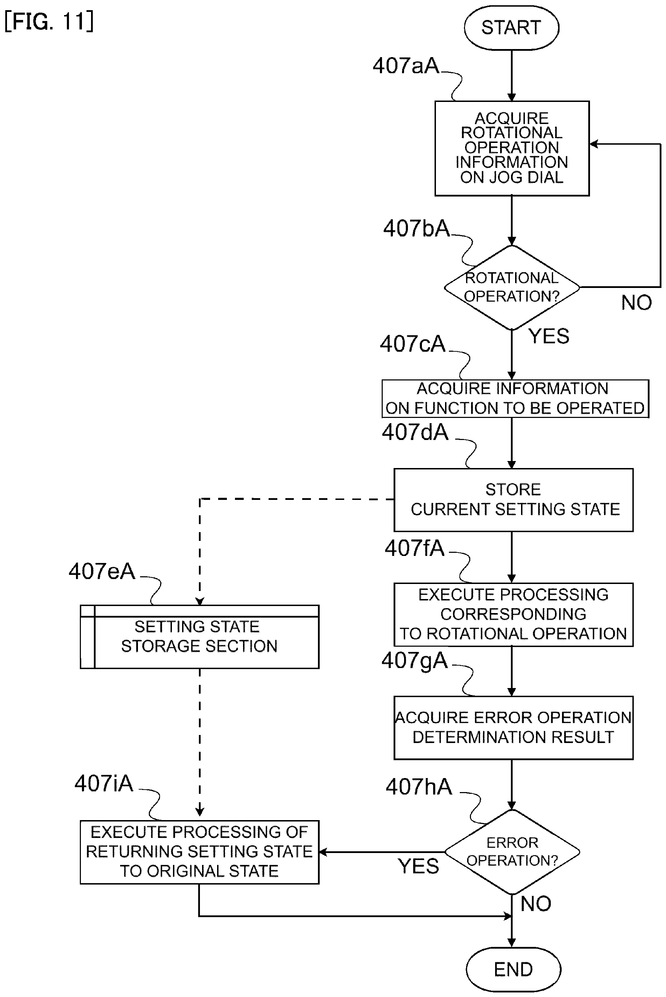

FIG. 11 is a flowchart for illustrating processing in the operation processing section 407 to which the second method is applied. Processing in Step 407aA to Step 407cA is similar to the processing in Step 407a to 407c of FIG. 10. Subsequently to Step 407cA, the operation processing section 407 stores the current setting state of the function to be operated in the setting state storage section 407eA in Step 407dA. In step 407fA, which follows, the operation processing section 407 executes the setting processing corresponding to the rotational operation, then acquires the error operation determination result for the rotational operation in Step 407gA, and determines whether or not the error operation determination result is "error operation" in Step 407A. When the error operation determination result is not the determination of "error operation," the operation processing section 407 finishes this flow.

Meanwhile, when the error operation determination result is the determination of "error operation," the operation processing section 407 proceeds to Step 407iA and executes processing of returning the setting state of the function to be operated to the setting state stored in the setting state storage section 407eA (setting state before the execution of the processing in Step 407fA). The processing of returning the setting state to the original state (processing of canceling the setting processing corresponding to the rotational operation) constitutes the restriction processing of causing the set processing for the mounted equipment 5, and 8f to 8h corresponding to the rotational operation to be restricted. As described above, in the second method, the setting processing corresponding to the input rotational operation is executed and when this rotational operation is subsequently determined to be the error operation by the error operation determination section 404, the processing of returning the setting state to the original state is executed, thereby invalidating the change in setting state, which change is provided through the unintended rotational operation.

In the first method, the setting state is changed after the input rotational operation is confirmed not to be the error operation, and hence it is possible to prevent the setting state from being brought into the unintended state. However, the setting state is not changed for the input operation performed by the operator in the period until the determination of the error operation is made, and even when the normal rotational operation is executed, it takes a time until this rotational operation is reflected to the setting, which possibly causes the operator to feel the sense of discomfort.

In the second method, when the rotational operation is input, there is quickly executed the processing for the setting change corresponding to this operation, and hence the operator can execute the operation without the sense of discomfort for the normal rotational operation. Meanwhile, when the error operation is executed, the processing of returning to the original state is executed after the temporary transition to the unintended setting state, hence the setting state instantaneously be switched, which possibly causes the operator to feel the sense of discomfort.

Each of the first method and the second method includes the advantage and the disadvantage, and hence it is desired that the selection be made according to the type of the function which can be set through use of the jog dial 9, the likelihood of the occurrence of the error operation, and the like. Moreover, there may be provided such specifications that the first method and the second method can dynamically be switched according to the length of the determination time, the machine body state, and the like.

The machine body setting management section 408 changes the various machine body settings and stores the current setting state according to an execution result of the processing in the operation processing section 407. Moreover, the display processing section 409 generates a display screen reflecting the machine body settings and displays the display screen on the monitor 10. Note that, in order to notify the operator of the occurrence of the error operation, it is desired that a message and the like be displayed according to whether or not the error operation has occurred.

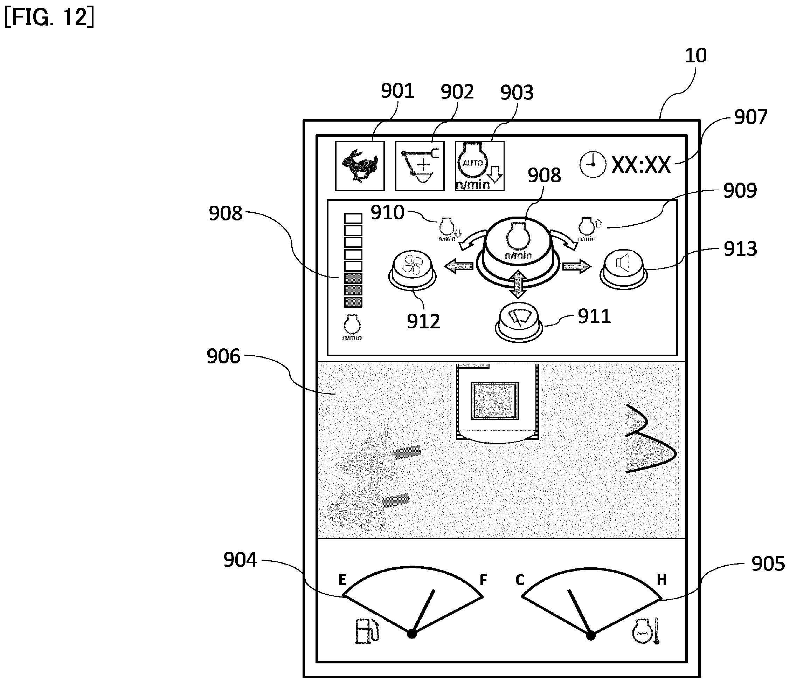

A description is now given of an example of a behavior of the present invention. FIG. 12 is a view for illustrating an example of the display screen of the monitor 10. On the display screen of the monitor 10, there are displayed icons 901, 902, and 903 of the setting state of the hydraulic excavator 1, gauges such as a fuel gauge 904 and a water temperature gauge 905, a camera view 906 for assisting the field of view of the operator, a clock 907, and the like. Further, in the input device in the present invention, the functions can optionally be switched through use of the jog dial 9, and hence guidance 908, 909, 910, 911, 912, and 913 corresponding to the respective operations of the jog dial 9 are displayed.

FIG. 12 illustrates an example of the state in which the jog dial 9 is in the engine speed mode 501 and indicates that the state transitions to the wiper mode 502 when the jog dial 9 is translationally operated toward the up and down direction, transitions to the air volume mode 503 when the jog dial 9 is translationally operated toward the left direction, and transitions to the sound volume mode 504 when the jog dial 9 is translationally operated toward the right direction.

Moreover, FIG. 12 indicates that the engine speed decreases when the jog dial 9 is rotated toward the left direction and the engine speed increases when the jog dial 9 is rotated toward the right direction, and the states of the functions currently operable through the jog dial 9 can be checked through the guidance 908 which displays the setting state. The guidance 908 has such specifications that the display is switched according to a change in operation target of the jog dial 9.

When the jog dial 9 is rotationally operated in the state illustrated in FIG. 12, an operation amount thereof is input to each of the error operation determination section 404 and the operation processing section 407. The error operation determination section 404 acquires the rotational operation amount and the determination time currently set, the rotational operation input for the first time is determined not to be the error operation when the translational operation is not input within this determination time in Step 404g, and a result thereof is output to the operation processing section 407. When the rotational operation is determined not to be the error operation, the operation processing section 407 uses any one of the first method and the second method to execute the change processing for the setting state through the rotational operation.

Meanwhile, when the translational operation is input within the determination time after the input of the rotational operation, it is assumed that the operator erroneously input the rotational operation as a result of the operator trying to operate the jog dial 9 while intending the translational operation. At this time, in the error operation determination section 404, the processing proceeds in the sequence of Steps 404e, 404h, and 404i, and the input rotational operation is determined to be the error operation. Note that also in the case in which the translational operation is input first and the rotational operation is input within the determination time, the processing proceeds in the similar sequence, and the input rotational operation is determined to be the error operation. When the rotational operation is determined to be the error operation, the processing for the setting change through this rotational operation is invalidated through any one of the first method and the second method in the operation processing section 407.

A description is first given of an example of the operation in the first method. In the first method, when the determination result acquired in Step 407d of FIG. 10 is the error operation, the processing directly proceeds from the branch processing in Step 407e to the finish processing, and hence the processing is finished without the setting change through the rotational operation. At this time, only the switching processing of the operation target determination section 403 for the operation target through the translational operation is valid, and hence the jog dial 9 switches to the mode corresponding to the direction of the translational operation, but the setting state of each function is not changed.

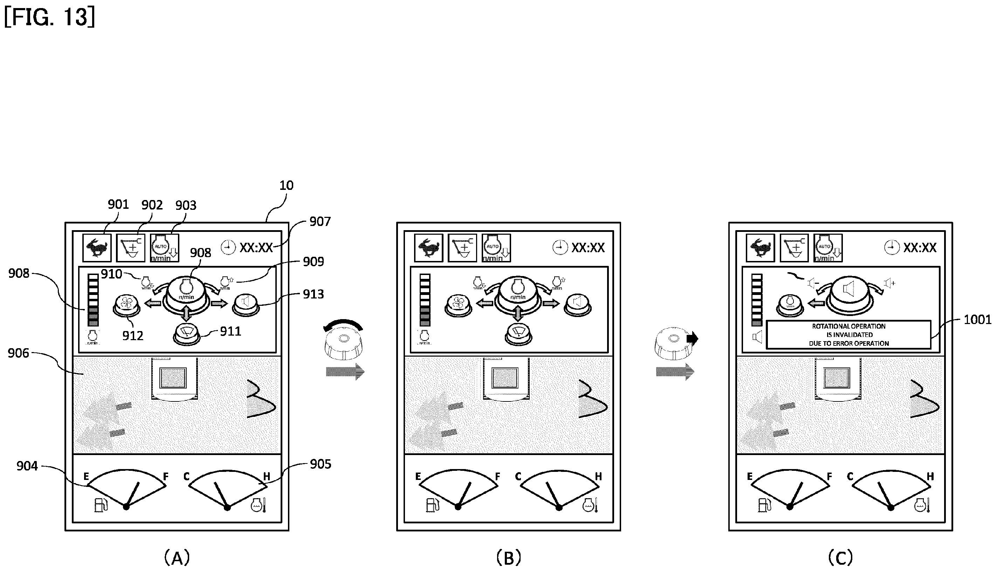

FIG. 13 is a view for illustrating an example of the screen display in a case in which the translational operation toward the right direction is input immediately after the rotational operation and hence the rotational operation is invalidated through the first method. The mode of the jog dial 9 is switched to the sound volume mode 504 through the translational operation toward the right direction, and the screen display displays guidance corresponding to this mode. Note that at this time, the rotational operation immediately before has been invalidated through the processing in the operation processing section 407, and hence the setting states of the engine speed and the sound volume have not changed since the time before the operation.

In an input device not having a function for the processing of determining the error operation and the processing of invalidating this operation, when such an error operation has occurred, it is required for the operator to execute the translational operation toward the left direction to switch the mode to the engine speed mode 501 and to then execute the rotational operation of returning the setting state changed through the error operation to the original state. In the present invention, the change in setting state as a result of the error operation is prevented through the processing in the error operation determination section 404 and the operation processing section 407, and hence the operation of returning the setting state is not required, thereby being able to increase work efficiency.

Moreover, the no-change in setting state of the machine body even when the rotational operation is input possibly causes the operator to feel the sense of discomfort, and hence it is desired to use guidance 1001 indicating that the rotational operation is invalidated and the like to notify that the processing of the error operation prevention has been activated.

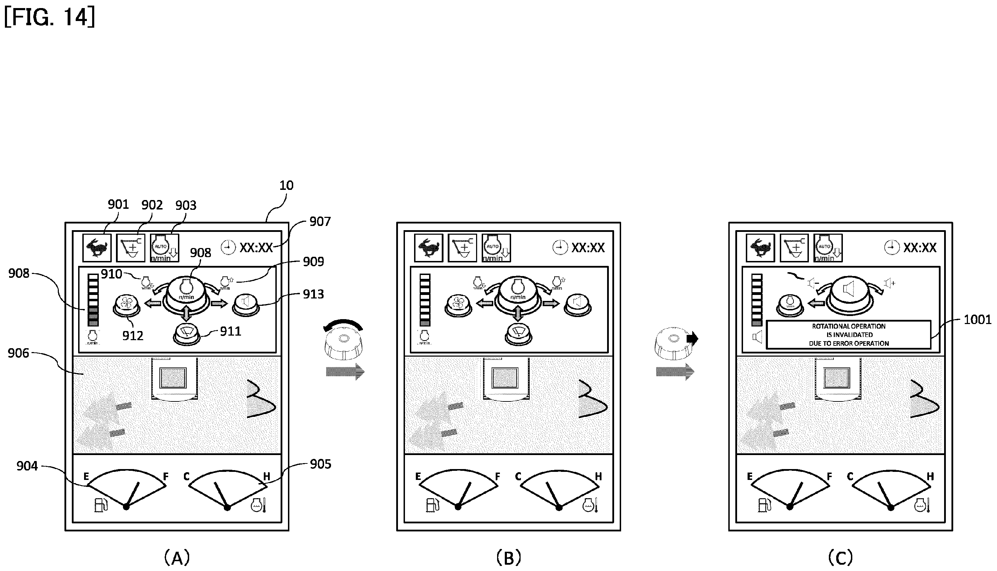

A description is now given of an example of the operation in the second method. FIG. 14 is a view for illustrating an example of the screen display in a case in which the translational operation toward the right direction is input immediately after the rotational operation and hence the rotational operation is invalidated through the second method. In the second method, when the rotational operation is input, since the setting change through this operation is immediately made, the change in the setting state (in this example, a decrease in the engine speed) by the error operation temporarily occurs as illustrated (B) of FIG. 14, which is different from the behavior in the first method (FIG. 13). Note that, in the second method, the setting state before the setting change through this rotational operation is stored in the setting state storage section 407eA and hence, when the translational operation toward the right direction is subsequently input and the rotational operation immediately before is determined to be the error operation, the processing of returning the state to the original setting state is executed in Step 407iA. Thus, in the state of (C) of FIG. 14, the engine speed has returned to the state before the error operation ((A) of FIG. 14), hence the operator is not required to return the setting state to the original setting state, and the work efficiency can be increased.

There is described above the example in which the rotational operation is first input and the translational operation is then input, but the similar processing is executed also in the case in which the translational operation is first input and the rotational operation is input immediately after that, the rotational operation is determined as the error operation, and the setting change through this rotational operation is invalidated. Note that in the case in which the translational operation is first input and the rotational operation is input immediately after that, it is possible to determine this rotational operation as the error operation at the time of input of the rotational operation, and hence it is desired that the setting change processing through this rotational operation be not executed as in the first method and be invalidated.

### (Summary)

In the present embodiment, in the work machine 1 including the machine bodies 1A, 1d, and 1e, the mounted equipment 5 and 8f to 8h mounted to the machine bodies 1A, 1d, and 1e, the translationally operable and rotationally operable input device 9, and the controller 12 that executes the setting processing for the mounted equipment 5 and 8f to 8h in response to the translational operation on the input device 9 and the rotational operation on the input device 9, the controller 12 executes the restriction processing of causing the setting processing for the mounted equipment 5 and 8f to 8h corresponding to the rotational operation on the input device 9 to be restricted in the case in which the translational operation on the input device 9 and the rotational operation on the input device 9 are being simultaneously executed or in the case in which the time after the operation of any one of the translational operation on the input device 9 and the rotational operation on the input device 9 is finished until the operation of the other one thereof is started is shorter than the predetermined determination time.

According to the present embodiment configured as described above, in the case in which the rotational operation is executed during the translational operation on the input device 9 or in the case in which the translational operation and the rotational operation are executed at a short interval, the setting processing for the mounted equipment 5 and 8f to 8h corresponding to this rotational operation is restricted, and hence the setting change for the mounted equipment 5 and 8f to 8h through the unintended rotational operation can be prevented. As a result, it is not required to again operate the input device 9, and hence the work efficiency can be increased.

Moreover, the restriction processing in the present embodiment is the processing of invalidating the rotational operation on the input device 9. As a result, it is possible to prevent the execution of the setting processing corresponding to the unintended rotational operation.

Moreover, the restriction processing in the present embodiment is the processing of cancelling the setting processing for the mounted equipment 5 and 8f to 8h corresponding to the rotational operation on the input device 9, and hence the controller 12 executes the setting processing corresponding to the rotational operation on the input device 9 and then executes the restriction processing. As a result, the setting processing corresponding to the intended rotational operation is quickly executed, and hence it is possible to prevent the sense of discomfort of the operator.

Moreover, the controller 12 in the present embodiment skips the execution of the restriction processing and executes the setting processing for the mounted equipment 5 and 8f to 8h corresponding to the rotational operation on the input device 9 in the case in which the direction of the translational operation on the input device 9 and the direction of the rotational operation on the input device 9 are the specific combination even when the translational operation and the rotational operation on the input device 9 are simultaneously executed or when the time after the operation of any one of the translational operation on the input device 9 and the rotational operation on the input device 9 is finished until the operation of the other one thereof is started is shorter than the predetermined determination time. As a result, the error operation determination can more accurately be made, and hence it is possible to prevent a decrease in work efficiency due to the determination of the error operation unnecessarily made.

Moreover, the work machine 1 according to the present embodiment includes the operation devices 8a to 8d that are used to operate the machine bodies 1A, 1d, and 1e, and the operation state switching device 11 that switches the operatable state in which the operation of the machine bodies 1A, 1d, and 1e through use of the operation devices 8a to 8d is possible and the non-operatable state in which the operation of the machine bodies 1A, 1d, and 1e through use of the operation devices 8a to 8d is impossible, and the predetermined determination time is set longer in the operatable state than in the non-operatable state. As a result, it is possible to more accurately sense the unintended rotational operation on the input device 9, which unintended rotational operation is performed by the operator paying attention to the operation of the work machine 1.

Moreover, the input device 9 in the present embodiment is the jog dial 9. With this configuration, it is possible to prevent the change in the setting states of the mounted equipment 5, and 8f to 8h from being changed, which change is provided through the unintended rotational operation on the jog dial 9.

The embodiment according to the present invention has been described in details, but the present invention is not limited to the embodiment described above and includes various modification examples. For example, the embodiment described above is detailed for an easy-to-understand description of the present invention and the present invention is not necessarily limited to a case including all the described configurations.

### Description of Reference Characters

1: hydraulic excavator (work machine)
1a: boom
1A: front work device (machine body)
1b: arm
1c: bucket
1d: upper swing structure (machine body)
1e: lower travel structure (machine body)
1f: cabin
2a: boom cylinder
2b: arm cylinder
2c: bucket cylinder
3d: swing motor
3e, 3f: travel motor
4a to 4d: posture sensor
5: engine (mounted equipment)
6: pump
7: electronic control valve
8a to 8d: operation lever (operation device)
8e: operator's seat
8f: wiper (mounted equipment)
8g: audio instrument (mounted equipment)
8h: air conditioner (mounted equipment)
9: jog dial (input device)
10: monitor
11: shutoff lever (operation state switching device)
12: controller
301: translational operation
302: rotational operation
401: translational operation amount determination section
402: rotational operation amount determination section
403: operation target determination section
404: error operation determination section
405: operation possibility determination section
406: determination time management section
407: operation processing section
407eA: setting state storage section
408: machine body setting management section
409: display processing section
501: engine speed mode
502: wiper mode
503: air volume mode
504: sound volume mode
510 to 512 translational operation
901 to 903: icon
904: fuel gauge
905: water temperature gauge
906: camera view
907: clock
908 to 913, 1001: guidance

## Claims

1. A work machine comprising:
a machine body;
mounted equipment mounted to the machine body;
an input device that is translationally operable and rotationally operable; and
a controller that is configured to execute setting processing for the mounted equipment in response to a translational operation on the input device and a rotational operation on the input device, wherein
the controller is configured to execute restriction processing of causing the setting processing for the mounted equipment, the setting processing corresponding to the rotational operation on the input device, to be restricted in a case in which the translational operation on the input device and the rotational operation on the input device are being simultaneously executed or in a case in which a time after any one of the translational operation on the input device and the rotational operation on the input device is finished until another one of the translational operation and the rotational operation is started is shorter than a predetermined determination time.

2. The work machine according to claim 1, wherein
the restriction processing is processing of invalidating the rotational operation on the input device.

3. The work machine according to claim 1, wherein
the restriction processing is processing of canceling the setting processing for the mounted equipment, the setting processing corresponding to the rotational operation on the input device, and
the controller is configured to execute the setting processing corresponding to the rotational operation on the input device and to then execute the restriction processing.

4. The work machine according to claim 1, wherein
the controller is configured to skip the execution of the restriction processing and to execute the setting processing for the mounted equipment, the setting processing corresponding to the rotational operation on the input device, in a case in which a direction of the translational operation on the input device and a direction of the rotational operation on the input device are a specific combination even when the translational operation and the rotational operation on the input device are simultaneously executed or even when the time after the any one of the translational operation on the input device and the rotational operation on the input device is finished until the other one of the translational operation and the rotational operation is started is shorter than the predetermined determination time.

5. The work machine according to claim 1, wherein
the work machine includes
an operation device that is used to operate the machine body, and
an operation state switching device that switches an operatable state in which an operation of the machine body through use of the operation device is valid and a non-operatable state in which an operation of the machine body through use of the operation device is invalid, and
the predetermined determination time is set to be longer in the operatable state than in the non-operatable state.

6. The work machine according to claim 1, wherein
the input device is a jog dial.
